(19) Europäisches Patentamt / European Patent Office / Office européen des brevets

(11) **EP 1 682 588 B1**

(12) **EUROPÄISCHE PATENTSCHRIFT**

(45) Veröffentlichungstag und Bekanntmachung des Hinweises auf die Patenterteilung:
**27.05.2009 Patentblatt 2009/22**

(51) Int Cl.:
***C08F 6/16*** *(2006.01)*     ***C08J 3/16*** *(2006.01)*

(21) Anmeldenummer: **04818384.2**

(22) Anmeldetag: **05.11.2004**

(86) Internationale Anmeldenummer:
**PCT/EP2004/012515**

(87) Internationale Veröffentlichungsnummer:
**WO 2005/047344 (26.05.2005 Gazette 2005/21)**

(54) **VERFAHREN ZUR HERSTELLUNG VON POLYMERISATPULVERN AUS WÄSSRIGEN POLYMERISATDISPERSIONEN**

METHOD FOR THE PRODUCTION OF POLYMER POWDERS FROM AQUEOUS POLYMER DISPERSIONS

PROCEDE DE PRODUCTION DE POUDRES POLYMERES A PARTIR DE SUSPENSIONS POLYMERES AQUEUSES

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **07.11.2003 DE 10352479**

(43) Veröffentlichungstag der Anmeldung:
**26.07.2006 Patentblatt 2006/30**

(73) Patentinhaber: **BASF SE**
**67056 Ludwigshafen (DE)**

(72) Erfinder:
• **AMRHEIN, Patrick**
**65239 Hochheim (DE)**
• **WEISS, Axel**
**67346 Speyer (DE)**
• **VO , Hartwig**
**67227 Frankenthal (DE)**
• **NOLTE, Rainer**
**67117 Limburgerhof (DE)**
• **BOTHE, Marc**
**67117 Limburgerhof (DE)**
• **MEISTER, Martin**
**67434 Neustadt (DE)**

(56) Entgegenhaltungen:
**EP-A- 0 939 100**     **DE-A1- 2 214 410**
**US-A- 4 246 309**     **US-A- 4 340 702**

**Beschreibung**

Die vorliegende Erfindung betrifft ein Verfahren zur Herstellung von Polymerisatpulver aus einer wässrigen Polymerisatdispersion mit einem im Vergleich zu dieser wässrigen Polymerisatdispersion geringeren Anteil an wasserlöslichen Verbindungen, bezogen auf das in Form von wasserunlöslichen Polymerisatteilchen vorliegende Polymerisat, das dadurch gekennzeichnet ist, dass die wässrige Polymerisatdispersion in einem ersten Verfahrensschritt einer Membranfiltration und in einem nachfolgenden zweiten Verfahrensschritt einer Sprühtrocknung unterworfen wird.

Die Herstellung von Polymerisatpulvern aus wässrigen Polymerisatdispersioneh erfolgt häufig durch Sprühtrocknung der entsprechenden wässrigen Polymerisatdispersion. Dabei verbleiben jedoch die wasserlöslichen, nichtflüchtigen Verbindungen der wässrigen Polymerisatdispersion im resultierenden Polymerisatpulver.

In einer Vielzahl von Anwendungen werden aber Polymerisatpulver benötigt, welche einen geringen Anteil an wasserlöslichen Verbindungen aufweisen.

So werden beispielsweise bei transparenten thermoplastischen Formmassen aus Polyvinylchlorid (PVC) polymere Modifizierungsmittel zugegeben, welche die Schlagzähfestigkeit dieser PVC-Formmassen erhöhen.

Diese polymeren Modifizierungsmittel zur Verbesserung der Schlagzähfestigkeit (Schlagzähmodifier) werden häufig durch radikalisch initiierte wässrige Emulsionspolymerisation hergestellt. Zur Sicherstellung der Transparenz der PVC-Formmassen, weisen die mit Gehalten von bis zu 40 Gew.-% eingearbeiteten Schlagzähmodifier einen Brechungsindex auf, der gleich oder zumindest möglichst ähnlich dem PVC-Brechungsindex ist. Zur Erreichung dieses Ziels sind im Stand der Technik eine Vielzahl von teilvernetzten, mehrphasigen Emulsionspolymerisaten, insbesondere auf Basis von Butadien und Styrol (sogenannte MBS-Modifier) oder auf Basis von Styrol, Alkylacrylaten und Methylmethacrylat offenbart (siehe hierzu beispielsweise DE-A 2013020, DE-A 2130989, DE-A 2244519, DE-A 2249023, DE-A 2438402, DE-A 2557828, DE-A 3216988, DE-A 3216989, DE-A 3316224, DE-A 3365229, DE-A 3460373, EP-A 50848, EP-A 93854, EP-A 93855, EP-A 124700, EP-A 379086, US-A 3426101, US-A 3971835, US-A 4064197, US-A 4145380, US-A 4128605, US-A 4536548 oder US-A 4581414). Im Regelfall werden die vorgenannten Emulsionspolymerisate aus den wässrigen Polymerisatdispersionen durch Zusatz von Fällungsmitteln ausgefällt, gewaschen, getrocknet und in Form von Pulvern mit PVC-Pulver sowie weiteren gängigen Hilfsmitteln zum sogenannten "dry blend" homogen gemischt und in einem nachfolgenden Schmelzschritt, beispielsweise mittels eines Extrusions-, Spritzguß- oder Kalandrierungsschritt in die Gebrauchsform überführt.

Da insbesondere auch die aus der Emulsionspolymerisation herrührenden wasserlöslichen Bestandteile, wie Emulgatoren, Schutzkolloide, Radikalinitiatoren, Radikalkettenüberträger oder oligomere wasserlösliche Verbindungen sowie die bei der Fällung eingebrachten Fällungsmittel die optischen Eigenschaften, wie Transparenz oder Farbe und die thermische Stabilität des schlagzähmodifizierten PVCs negativ beeinflussen würden, müssen die wasserlöslichen Bestandteile der hergestellten Schlagzähmodifier abgetrennt werden. Dies erfolgt im technischen Maßstab in der Regel durch Fällung des Schlagzähmodizieres und Separierung der wässrigen Phase - und damit die Abtrennung der wasserlöslichen Bestandteile - durch fest/flüssig-Trennmethoden, wie beispielsweise Zentrifugation und Dekantierung. Zur Vervollständigung der Abtrennung wird die zurückbleibende Masse des Schlagzähmodifiers mit entionisiertem Wasser, ggf. auch Mischungen aus entionisiertem Wasser und organischem Lösungsmittel, in welchem der Schlagzähmodifier nicht löslich ist, aufgeschlämmt, gerührt und die wässrige Flüssigphase erneut durch Zentrifugation und Dekantierung abgetrennt. Dieser aufwendige Vorgang muss zur ausreichenden Abreicherung der wasserlöslichen Verbindungen in der Regel mehrmals wiederholt werden. Anschließend erfolgt die Trocknung des Schlagzähmodifiers.

In der DE-A-2 214 410 wird ein Verfahren zur Sprühtrocknung von Polymerisatdispersionen beschrieben.

Der vorliegenden Erfindung lag die Aufgabe zugrunde, ein verbessertes Verfahren zur Herstellung von Polymerisatpulvern, insbesondere von Polymerisaten mit schlagzähmodifizierenden Eigenschaften, mit einem geringeren Anteil an wasserlöslichen Verbindungen aus wässrigen Polymerisatdispersionen zur Verfügung zu stellen.

Überraschender Weise wurde nun gefunden, dass die Aufgabe durch das eingangs definierte Verfahren gelöst wird.

Wässrige Polymerisatdispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix oder Polymerisatteilchen, in disperser Verteilung befindlich enthalten. Der mittlere Durchmesser der Polymerisatteilchen liegt häufig im Bereich von 10 bis 1000 nm, oft 50 bis 500 nm oder 100 bis 300 nm. Der Polymerisatfeststoff gehalt der wässrigen Polymerisatdispersionen beträgt in der Regel 20 bis 70 Gew.-%.

Wässrige Polymerisatdispersionen sind insbesondere durch radikalisch initiierte wässrige Emulsionspolymerisation von ethylenisch ungesättigten Monomeren zugänglich. Diese Methode ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972;

D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Die radikalisch initiierte wässrige Emulsionspolymerisation erfolgt üblicherweise so, dass man die ethylenisch ungesättigten Monomeren, in der Regel unter Mitverwendung von Radikalkettenüberträgern und Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert.

Das erfindungsgemäße Verfahren lässt sich insbesondere mit wässrigen Polymerisatdispersionen durchführen, deren Polymerisatteilchen

| | |
|---|---|
| 50 bis 99,9 Gew.-% | Ester der Acryl- und/oder Methacrylsäure mit 1 bis 12 C-Atome aufweisenden Alkanolen und/oder Styrol, oder |
| 50 bis 99,9 Gew.-% | Styrol und/oder Butadien, oder |
| 50 bis 99,9 Gew.-% | Vinylchlorid und/oder Vinylidenchlorid, oder |
| 40 bis 99,9 Gew.-% | Vinylacetat, Vinylpropionat, Vinylester der Versaticsäure, Vinyl-ester langkettiger Fettsäuren und/oder Ethylen |

in einpolymerisierter Form enthalten.

Insbesondere sind erfindungsgemäß solche wässrigen Polymerisatdispersionen einsetzbar, deren Polymerisate zu

- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
  50 bis 99,9 Gew.-% wenigstens ein Ester der Acryl- und/oder Methacrylsäure mit 1 bis 12 C-Atome aufweisenden Alkanole und/oder Styrol, oder

- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
  50 bis 99,9 Gew.-% Styrol und/oder Butadien, oder

- 0,1 bis 5 Gew.-% wenigstens eine 3 bis 6 C-Atome aufweisende $a,\beta$-monoethylenisch ungesättigte Mono- und/oder Dicarbonsäure und/oder deren Amid und
  50 bis 99,9 Gew.-% Vinylchlorid und/oder Vinylidenchlorid, oder

- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
  40 bis 99,9 Gew.-% Vinylacetat, Vinylpropionat, Vinylester der Versaticsäure, Vinylester langkettiger Fettsäuren und/oder Ethylen
  in einpolymerisierter Form enthalten.

Erfindungsgemäß können solche Polymerisate eingesetzt werden, deren Glasübergangstemperatur -60 bis +150°C, oft -40 bis +100°C und häufig -20 bis +50°C beträgt. Mit der Glasübergangstemperatur ($T_g$), ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + \dots x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Vorteilhaft lassen sich im erfindungsgemäßen Verfahren solche wässrigen Polymerisatdispersionen einsetzen, deren Polymerisate schlagzähmodifizierende Eigenschaften in transparenten PVC-Formassen aufweisen. Insbesondere lassen sich die aus dem Stand der Technik bekannten wässrigen Polymerisatdispersionen einsetzten, deren Emulsionspolymerisate teilvernetzt und mehrphasig sind sowie einen dem transparenten PVC gleichen oder wenigstens ähnlichen Brechungsindex aufweisen (siehe hierzu beispielsweise DE-A 2013020, DE-A 2130989, DE-A 2244519, DE-A 2249023, DE-A 2438402, DE-A 2557828, DE-A 3216988, DE-A 3216989, DE-A 3316224, DE-A 3365229, DE-A 3460373, EP-A 50848, EP-A 93854, EP-A 93855, EP-A 124700, EP-A 379086, US-A 3426101, US-A 3971835, US-A 4064197, US-A 4145380, US-A 4128605, US-A 4536548 oder US-A 4581414).

Abhängig von den zur Emulsionspolymerisation eingesetzten Monomeren, der Art und der Menge der für die Emulsionspolymerisation erforderlichen Hilfsstoffen (beispielsweise die wasserlöslichen Radikalinitiatoren, Emulgatoren, Schutzkolloiden oder Radikalkettenüberträger), der Durchführung der Polymerisationsreaktion (z.B. Fahrweise, Ansatzgröße, Druck, Temperatur, Umsatz) sowie der Nachbearbeitung der erhaltenen wässrigen Polymerisatdispersion (beispielsweise Reduzierung der Restgehalte an nichtumgesetzten Monomeren durch dem Fachmann bekannte chemische Nachpolymerisationsmethoden oder Reduzierung leichtflüchtiger Bestandteile durch dem Fachmann ebenfalls bekannte Inertgas- oder Wasserdampfstrippverfahren), enthalten die erhaltenen wässrigen Polymerisatdispersionen bis zu 20 Gew.-% an wasserlöslichen Verbindungen, bezogen auf das in Form von wasserunlöslichen Polymerisatteilchen vorliegende Polymerisat.

Im Rahmen dieser Schrift soll als Gehalt an wasserlöslichen Verbindungen in wässrigen Polymerisatdispersionen, bezogen auf das in Form von wasserunlöslichen Polymerisatteilchen vorliegende Polymerisat, derjenige Gehalt gemeint sein, der wie nachfolgend angegeben, ermittelt wurde. Zur seiner Bestimmung wird in einem ersten Schritt eine aliquote Menge der homogenen wässrigen Polymerisatdispersion entnommen und diese durch Erhitzen auf 140°C/ Atmosphärendruck (ca. 1,01 bar absolut) bis zur Gewichtskonstanz getrocknet. Aus dem resultierenden festen Rückstand lässt sich der Gehalt $R_{gesamt}$ (in Gew.-%) an nichtflüchtigen Bestandteilen (bestehend aus nicht wasserlöslichem Polymerisat sowie wasserlöslichen Emulgatoren, Schutzkolloiden, Radikalinitiatoren, Radikalkettenüberträgern, oligomeren Verbindungen sowie ggf. weiteren vorhandenen üblichen Hilfsmitteln, wie Entschäumer, Biozide, Duftstoffe etc.), bezogen auf die zur Trocknung eingesetzte Menge an wässriger Poiymerisatdispersion, ermitteln. In einem zweiten Schritt wird eine definierte Menge der homogen vorliegenden wässrigen Polymerisatdispersion solange einer Ultrazentrifugation unterzogen, bis die in disperser Verteilung vorliegenden wasserunlöslichen Polymerisatteilchen gravimetrisch abgeschieden sind. Die Methode der Ultrazentrifugation ist dem Fachmann bekannt (siehe hierzu beispielsweise S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175 oder W. Mächtle, Makromolekulare Chemie 1984 (185), Seiten 1025 bis 1039). Anschließend wird aus dem überstehenden klaren wässrigen Serum eine aloquote Menge entnommen und diese ebenfalls durch Erhitzen auf 140°C/Atmosphärendruck (ca. 1,01 bar absolut) bis zur Gewichtskonstanz getrocknet. Aus dem resultierenden festen Rückstand lässt sich der Gehalt $R_{löslich}$ (in Gew.-%) an nichtflüchtigen wasserlöslichen Bestandteilen (bestehend aus wasserlöslichen Emulgatoren, Schutzkolloiden, Radikalinitiatoren, Radikalkettenüberträgern, oligomeren Verbindungen sowie ggf. weiteren vorhandenen üblichen Hilfsmitteln, wie Entschäumer, Biozide, Duftstoffe etc.), bezogen auf die zur Zentrifugation eingesetzte Menge an wässriger Polymerisatdispersion, ermitteln. Der Gehalt G (in Gew.%) an wasserlöslichen Verbindungen in wässrigen Polymerisatdispersionen, bezogen auf das in Form von wasserunlöslichen Polymerisatteilchen vorliegende Polymerisat, lässt sich nun in einfacher Weise nach folgender Formel ermitteln:

$$G = \frac{R_{löslich} \times 100\ \%}{(R_{gesamt} - R_{löslich})}$$

Im Stand der Technik sind eine Vielzahl von Verfahren bekannt, welche die Abreicherung bzw. Abtrennung von wasserlöslichen Bestandteilen aus wässrigen Polymerisatdispersionen, beispielsweise mittels Ionenaustauschern (siehe hierzu beispielsweise WO 00/35971 oder JP-A 2199130) oder adsorbierenden Feststoffen M.C. Wilkinson und D. Fairhurst, J. Coll. Interf. Sci. 79 (1) , (1981), Seiten 272 bis 277) offenbaren.

Die Anwendung der Ultrafiltrationsmethode bei wässrigen Polymerisatdispersionen ist für die Aufkonzentrierung von sogenannten "Weißwassern", d.h. die bei der Reinigung bzw. Spülung von Anlagenteilen bei der Herstellung von wässrigen Polymerisatdispersionen anfallenden sehr verdünnten wässrigen Polymerisatdispersionen, bekannt [siehe hierzu beispielsweise US-B 6248809 sowie J. Zahka und L. Mir, Chem. Eng. Progr. 73 (1977), Seiten 53 bis 55].

Daneben wurden auch Dialysemethoden zur Aufreinigung von wässrigen Polymerisatdispersionen offenbart (siehe beispielsweise R.H. Ottewill und J.N. Shaw Z. U. Z. Polym. 215(2) (1967), Seiten 161ff. oder M.E. Labib und A.A. Robertson, J. Coll. Interf. Sci. 67 (1978), Seiten 543ff.).

In der DE-A 2817226 wird die Verwendung eines Bindemittels auf Basis einer wässrigen Polymerisatdispersion, deren Gehalt an wasserlöslichen Verbindungen durch Ultrafiltration reduziert wurde, zur Herstellung von genadelten Bodenbelägen beschrieben.

Die Methode der Membranfiltration - worunter im Rahmen dieser Schrift sowohl die Ultrafiltration, die Mikrofiltration als auch die Querstromfiltration verstanden werden sollen - selbst, d.h. die Trennung von gelösten Komponenten unterschiedlichen Molekulargewichts oder die Trennung von gelösten und ungelösten Komponenten in einem fluiden Medium - häufig Wasser - an einer geeigneten porösen Membran, wobei die ungelösten und/oder die gelösten Komponenten mit einem höheren Molekulargewicht die an der Membran zurückgehalten werden (Retentat), von den niedermolekularen gelösten Komponenten getrennt werden, welche die poröse Membran gemeinsam mit einem Teil des fluiden Mediums passieren (Permeat), ist dem Fachmann prinzipiell bekannt (siehe hierzu beispielsweise T. Melin und R. Rautenbach, Membranverfahren, Springer Verlag, Berlin, Heidelberg, 2003, M. Cheryan, Ultrafiltration Handbook, Technomic Pulbishing Company Inc., 1986 oder W.M. Samhaber, Chem.-Ing.-Tech. 59 (1987) Nr. 11, Seiten 844 bis 850). Dabei können die gelösten Komponenten, die die Membranen passieren können, sowohl organische und anorganische Salze bzw. niedermolekulare Verbindungen als auch wasserlösliche polymere organische Verbindungen mit einem mittleren Molekulargewicht $\leq 100000$ g/mol, sogenannte oligomere Verbindungen, sein.

Für das Membranverfahren können prinzipiell poröse Membranen eingesetzt werden, deren Porendurchmesser zwischen 1 nm (molekulare Trenngrenzen ca. 1000 g/mol) und 0,5 $\mu$m (molekulare Trenngrenzen ca. 1000000 g/mol), betragen. Zur Reinigung von wässrigen Polymerisatdispersionen haben sich insbesondere solche porösen Membranen als vorteilhaft erwiesen, deren Porendurchmesser 5 nm (molekulare Trenngrenzen ca. 10000 g/mol) bis 200 nm (molekulare Trenngrenzen ca. 500000 g/mol) betragen.

Damit die Membranporen nicht durch die in wässriger Dispersion vorliegenden Polymerisatteilchen verstopfen, empfiehlt es sich zur Abtrennung der wasserlöslichen Verbindungen aus wässrigen Polymerisatdispersionen solche porösen Membranen einzusetzten, deren Porendurchmesser $\leq 50$ %, $\leq 20$ % oder $\leq 10$ % des mittleren Teilchendurchmessers der in der zu behandelnden Polymerisatdispersion vorliegenden wasserunlöslichen Polymerisatteilchen betragen. Abhängig von der Oberflächenbeschaffenheit der Membranen und der Polymerisatzusammensetzung der Polymerisatteilchen, können aber auch solche Membranen vorteilhaft eingesetzt werden, deren Porendurchmesser in etwa dem mittleren Teilchendurchmesser entspricht. Als mittlerer Teilchendurchmesser soll in dieser Schrift der durch dynamische Lichtstreuung ermittelte Teilchendurchmesser (cumulant z-average; ISO-Norm 13321) verstanden werden.

Die porösen Membranen können aus organischen Polymeren, Keramik, Metall, Kohlenstoff oder Kombinationen daraus bestehen und müssen in dem wässrigen Dispergiermedium bei der Filtrationstemperatur stabil sein. Aus mechanischen Gründen sind die porösen Membranen in der Regel auf einer ein- oder mehrschichtigen porösen Unterstruktur aufgebracht

Besonders bevorzugt sind poröse Membranen, welche aus hydrophilen Materialien, wie beispielsweise aus Metall, Keramik, Regeneratcellulose, Acrylnitril, hydrophilisiertem Acrylnitril, hydrophilisiertem Polysulfon oder hydrophilisiertem Polyethersulfon bzw. hydrophilisiertem Polyetheretherketon aufgebaut sind.

Die porösen Membranen können in Flach-, Rohr-, Multikanalelement-, Kapillar- oder Wickelgeometrie eingesetzt werden, für die entsprechende Druckgehäuse, die eine Trennung zwischen Retentat und dem Permeat erlauben, verfügbar sind.

Die optimalen transmembranen Drücke zwischen Retentat- und Permeatseite liegen, im wesentlichen abhängig vom Durchmesser der Membranporen bzw. den molekularen Trenngrenzen, den hydrodynamischen Bedingungen, welche den Deckschichtaufbau auf der porösen Membran beeinflussen und der mechanischen Stabilität der porösen Membran bei der Filtrationstemperatur, je nach Membranart zwischen 0,2 und 20 bar vorzugsweise zwischen 0,3 und 5 bar. Höhere transmembrane Drücke führen in der Regel zu höheren Permeatflüssen. Dabei kann in dem Fall, in dem mehrere Retentat/Membran/ Permeat-Einheiten, sogenannte Membranmodule, in Serie geschaltet sind, der Transmembrandruck für jeden Modul durch Anhebung des Permeatdruckes abgesenkt und damit angepasst werden. Die Temperatur der Membranfiltration ist abhängig von der Membranstabilität sowie der Temperaturstabilität der wässrigen Polymerisatdispersion. Höhere Temperaturen führen in der Regel zu höheren Permeatflüssen. Die erreichbaren Permeatflüsse sind stark von der eingesetzten Membranart und Membrangeometrie, von den Prozessbedingungen sowie vom Polymerisatfeststoffgehalt der wässrigen Polymerisatdispersion abhängig. Die Permeatflüsse liegen typischer Weise zwischen 5 und 500 kg/m$^2$h.

Zur Abreicherung der in der wässrigen Polymerisatdispersionen in der wässrigen Phase gelösten Verbindungen, wie beispielsweise organische oder anorganische Salze, Radikalinitiatoren, Emulgatoren, Schutzkolloide, Radikalkettenüberträger, nicht umgesetzte Monomere sowie oligomeren Verbindungen wird die wässrige Polymerisatdispersion unter Überdruck (> 1 bar absolut) mit einer geeigneten porösen Membran in Kontakt gebracht und polymerfreies, die gelösten Verbindungen enthaltenes Permeat auf der Rückseite der Membran bei einem geringeren Druck als auf der Retentatseite abgezogen. Als Retentat erhält man eine aufkonzentrierte Polymerisatdispersion, die an gelösten Verbindungen abgereichert ist. Damit der Polymerisatfeststoffgehalt nicht zu hoch ansteigt, kann die abgetrennte Menge an Permeat kontinuierlich oder diskontionuierlich im Retentat durch entionisiertes Wasser ersetzt werden. Vorteilhaft verdünnt man die aus der radikalisch initiierten wässrigen Emulsionspolymerisation erhaltene Polymerisatdispersion auf einen Polymerisatfeststoffgehalt von 10 bis 40 Gew.-% oder bevorzugt 20 bis 30 Gew.-%, unterwirft diese verdünnte Polymerisatdispersion derart einer Membranfiltration, dass man der wässrigen Polymerisatdispersion pro Zeiteinheit so viel entionisiertes Wasser zuführt, wie als Permeat abgetrennt wird, so dass die Polymerkonzentration konstant bleibt.

Die verdünnte wässrige Polymerisatdispersion wird dabei in der Regel solange einer Membranfiltration unterzogen, bis der Anteil der wasserlöslichen Stoffen ≤ 3 Gew.-%, bevorzugt ≤ 2 Gew.-% und besonders bevorzugt ≤ 1 Gew.-% oder ≤ 0,5 Gew.-%, jeweils bezogen auf das in Form von wasserunlöslichen Polymerisatteilchen vorliegende Polymerisat, ist.

Um einen nennenswerten Deckschichtaufbau der Polymerisatteilchen auf der porösen Membranoberfläche zu vermeiden, der zu einer deutlichen Abnahme des Permeatflusses führen würde, ist es von Vorteil, wenn man zwischen der porösen Membran und der wässriger Polymerisatdispersion eine Relativgeschwindigkeit zwischen 0,1 bis 10 m/s einstellt, beispielsweise durch Umpumpen der wässrigen Polymerisatdispersion, durch mechanische Bewegung der Membran selbst oder durch Rühraggregate zwischen den Membranen.

Die Membranfiltration kann in Batchfahrweise durch mehrmaligen Durchgang der wässrigen Polymerisatdispersion durch einen bzw. mehrere parallel geschaltete Membranmodule oder kontinuierlich durch einmaligen Durchgang durch einen oder mehrere in Reihe geschaltete Membranmodule erfolgen. Häufig erfolgt die Membranfiltration durch mehrmaligen Durchgang der wässrigen Polymerisatdispersion durch einen Membranmodul oder durch einmaligen Durchgang durch mehrere in Reihe geschaltete Membranmodule.

Wesentlich ist, dass sich bei Bedarf die verdünnte wässrige Polymerisatdispersion durch weitere Permeatabtrennung und Unterbinden der Zufuhr an entionisiertem Wasser nach Abtrennung der wasserlöslichen Verbindungen durch die Membranfiltration wieder aufkonzentrieren lässt.

Die Verfahrensstufe der Sprühtrocknung von wässrigen Polymerisatdispersionen ist dem Fachmann ebenfalls bekannt. Sie erfolgt häufig in einem Trocknungsturm mit Hilfe von Zerstäubungsscheiben oder Ein- oder Zweistoffdüsen im Kopf des Turms. Die Trocknung der wässrigen Polymerisatdispersion wird mit einem heißen Gas, beispielsweise Stickstoff oder Luft, durchgeführt, das von unten oder oben, bevorzugt jedoch im Gleichstrom mit der wässrigen Polymerisatdispersion von oben in den Turm geblasen wird. Die Temperatur des Trockungsgases beträgt am Turmeingang etwa 90 bis 180°C, vorzugsweise 110 bis 160°C und am Turmausgang etwa 50 bis 90°C, bevorzugt 60 bis 80°C. Das aus dem Trocknungsturm ausgeschleuste Polymerisatpulver wird auf 20 bis 30°C abgekühlt.

Vorteilhaft erfolgt die Sprühtrocknung der wässrigen Polymeriatdispersion in Anwesenheit von 0,01 bis 10 Gew.-Teilen, oft 0,05 bis 5 Gew.-Teilen und häufig 0,05 bis 3 Gew.-Teilen eines anorganischen Antiblockmittels mit einer mittleren Teilchengröße von 0,001 bis 20 μm, jeweils bezogen auf 100 Gew.-Teile des in Form von wasserunlöslichen Polymerisatteilchen vorliegenden Polymerisats. Üblicherweise wird das Antiblockmittel gleichzeitig mit der wässrigen Polymerisatdispersion, aber räumlich davon getrennt in den Trocknungsturm eingegeben. Die Zugabe erfolgt beispielsweise über eine Zweistoffdüse oder Förderschnecke, im Gemisch mit dem Trocknungsgas oder über eine separate Öffnung.

Bei den dem Fachmann bekannten Antiblockmitteln handelt es sich in der Regel um Pulver anorganischer Feststoffe, mit einer mittleren Teilchengröße von 0,001 bis 20 μm, häufig von 0,005 bis 10 μm und oft von 0,005 bis 5 μm (in Anlehnung an ASTM C 690-1992, Multisizer/100 μm Kapillare).

Beispielhaft für Antiblockmittel genannt seien Kieselsäuren, Aluminiumsilikate, Carbonate, wie beispielsweise Calciumcarbonat, Magnesiumcarbonat oder Dolomit, Sulfate, wie beispielsweise Bariumsulfat sowie Talke, Leichtspat, Zemente, Dolomit, Calciumsilikate oder Diatomeenerde. In Frage kommen auch Mischungen vorgenannter Verbindungen, wie beispielsweise Mikroverwachsungen aus Silikaten und Carbonaten.

Abhängig von ihrer Oberflächenbeschaffenheit können die Antiblockmittel hydrophobe (wasserabstoßende) oder hydrophile (wasseranziehende) Eigenschaften aufweisen. Ein Maß für die Hydrophobie bzw. Hydrophilie eines Stoffes ist der Kontaktwinkel eines Tropfens entionisierten Wassers auf einem Presskörper des entsprechenden Antiblockmittels. Dabei ist die Hydrophobie umso größer bzw. die Hydrophilie um so kleiner, je größer der Kontaktwinkel des Wassertropfens auf der Oberfläche des Presskörpers ist und umgekehrt. Zur Entscheidung, ob ein Antiblockmittel hydrophober bzw. hydrophiler ist als ein anderes, werden von beiden Antiblockmitteln einheitliche Siebfraktionen (= gleiche Teilchengrößen oder Teilchengrößenverteilungen) hergestellt. Aus diesen Siebfraktionen gleicher Größen oder Größenverteilungen werden unter identischen Bedingungen (Menge, Fläche, Pressdruck, Temperatur) Presskörper mit waagrechten Oberflächen hergestellt. Mit einer Pipette wird auf jeden Presskörper ein Wassertropfen aufgetragen und unmittelbar danach der Kontaktwinkel zwischen Presskörperoberfläche und Wassertropfen bestimmt. Je größer der Kontaktwinkel zwischen Presskörperoberfläche und Wassertropfen ist, je größer ist die Hydrophobie bzw. desto kleiner ist die Hydrophilie.

Im Rahmen dieser Schrift werden als hydrophile Antiblockmittel alle diejenigen Antiblockmittel verstanden, die hydrophiler sind als die verwendeten hydrophoben Antiblockmittel, d.h. deren Kontaktwinkel kleiner sind als die der beim Sprühprozess eingesetzten hydrophoben Antiblockmittel.

Häufig weisen die hydrophoben Antiblockmittel einen Kontaktwinkel ≥ 90 °, ≥ 100 ° oder ≥ 110 ° auf, während die hydrophilen Antiblockmittel einen Kontaktwinkel < 90 °, ≤ 80 ° oder ≤ 70 ° aufweisen.

Als hydrophile Antiblockmittel werden beispielsweise Kieselsäuren, Quarz, Dolomit, Calciumcarbonat, Natrium/ Aluminiumsilikate, Calciumsilikate oder Mikroverwachsungen aus Silikaten und Carbonaten und als hydrophobe Antiblockmittel beispielsweise Talk (Magensiumhydrosilikat mit Schichtstruktur), Chlorit (Magnesium/Aluminium/ Eisenhydrosilikat), mit Organochlorsilanen behandelte Kieselsäuren (DE-A 3101413) oder allgemein hydrophile Antiblockmittel, welche mit hydrophoben Verbindungen beschichtet sind, wie beispielsweise gefälltes Calciumcarbonat beschichtet mit Calciumstearat, verwendet.

Abhängig vom Einsatzzweck werden hydrophile Antiblockmittel häufig dann eingesetzt, wenn das erhaltene Polymerisatpulver in wässrigem Medium weiterverarbeitet werden soll, während hydrophobe Antiblockmittel oft dann eingesetzt werden, wenn das erhaltene Polymerisatpulver in einem hydrophoben Medium weiterverarbeitet werden soll.

Von Bedeutung ist, dass bei der Herstellung von Polymerisatpulvern, die in transparenten PVC-Formmassen als Schlägzähmodifier eingesetzt werden sollen, insbesondere die aus dem Stand der Technik bekannten, vorgenannten teilvernetzten und mehrphasigen Emulsionspolymerisate, die Sprühtrocknung der entsprechenden wässrigen Polymerisatdispersion in Anwesenheit von 0,01 bis 3 Gew.-Teilen, 0,01 bis 2 Gew.-Teilen, 0,01 bis 1 Gew.-Teilen, 0,01 bis 0,8 Gew.-Teilen oder 0,01 bis 0,5 Gew.-Teilen eines anorganischen hydrophoben oder hydrophilen Antiblockmittels mit einer mittleren Primärteilchengröße (nach Herstellerangaben) von 5 bis 50 nm, häufig 5 bis 30 nm und oft 5 bis 20 nm, jeweils bezogen auf 100 Gew.-Teile des in Form von wasserunlöslichen Polymerisatteilchen vorliegenden Polymerisats, erfolgt.

Als geeignete Antiblockmittel seien die als Pulver vorliegenden hydrophilen Aerosil®-Typen der Firma Degussa AG, Deutschland, wie z.B. Aerosil® 90, Aerosil® 130, Aerosil® 150, Aerosil® 200, Aerosil® 300, Aerosil® 380, Aerosil® MOX 117 mit mittleren Primärteilchengröße von 7 bis 20 nm sowie hydrophobe Aerosil®-Typen wie z.B. Aerosil® R972, Aerosil® R974, Aerosil® R202, Aerosil® R805, Aerosil® R812, Aerosil® R104, Aerosil® R106, Aerosil® R816 mit mittleren Primärteilchengröße von 7 bis 16 nm genannt. Aluminiumoxid C, Titandioxid P25, Titandioxid T805 der Firma Degussa AG, Deutschland, können ebenfalls verwendet werden. Als weitere Alternativen seien die pyrogenen Kieselsäuren CAB- O-SIL® TS-530, CAB-O-SIL® TS-720, CAB-O-SIL® TS-610, CAB-O-SIL® M-5, CAB-O-SIL® H-5, CAB-O-SIL® HS-5 und CAB-O-SIL® EH-5 der Firma Cabot GmbH, Deutschland und die pyrogenen Kieselsäuren Wacker HDK® H20, Wacker HDK® H2000, Wacker HDK® N20, Wacker HDK® T30 der Firma Wacker-Chemie GmbH genannt.

Das erfindungsgemäße Verfahren eröffnet einen einfachen und kostengünstigen Zugang zu Polymerisatpulvern aus wässrigen Polymerisatdispersionen mit einem im Vergleich zu diesen wässrigen Polymerisatdispersionen geringeren Anteil an wasserlöslichen Verbindungen, bezogen auf das in Form von wasserunlöslichen Polymerisatteilchen vorliegende Polymerisat. Insbesondere bei den mit den erfindungsgemäß zugänglichen teilvernetzten Schlagzähmodifiern des vorgenannten Standes der Technik hergestellten PVC-Massen, resultieren eine Verbesserung der thermischen Stabilität, der Witterungsstabilität und der Gesamtdurchsicht. Desweiteren werden auch noch die Gelbwerte sowie die Trübung der entsprechend modifizierten PVC-Massen vorteilhaft reduziert.

Nachfolgendes nicht einschränkendes Beispiel erläutert die Erfindung.

Beispiel:

1. Wässrige Polymerisatdispersion

Ein Gemisch aus 15,6 kg entionisiertem Wasser, 1,58 kg eines 33 gew.-%igen wässrigen Polymerlatex (hergestellt durch radikalisch initiierte Emulsionspolymerisation von Styrol) mit einem gewichtsmittleren Teilchendurchmesser $D_{W50}$ von 30 nm, 0,05 kg Natriumhydrogencarbonat und 0,56 kg einer Lösung von 0,16 kg Natriumpersulfat in 2,07 kg entionisiertem Wasser wurde unter Stickstoffatmosphäre auf 80°C erhitzt. Dazu wurde bei vorgenannter Temperatur unter Rühren (50 Umdrehungen pro Minute) innerhalb von 90 Minuten eine Emulsion, hergestellt aus 23,55 kg entionisiertem Wasser, 1,16 kg des Natriumsalzes eines C12-substituierten Biphenylethersulfonates (Dowfax® 2A1, Marke der Dow Chemical Company), 22,96 kg Styrol und 0,17 kg 1,4-Butandioldiacrylat, kontinuierlich zugegeben. Anschließend wurde noch 30 Minuten nachpolymerisiert. Anschließend wurde dem Reaktionsgemisch unter Rühren innerhalb von einer Stunde eine Emulsion bestehend aus 14,53 kg entionisiertem Wasser, 0,75 kg Dowfax® 2A1, 18,76 kg n- Butylacrylat und 0,22 kg 1,4-Butandioldiacrylat kontinuierlich zugegeben. Anschließend wurde noch 45 Minuten nachpolymerisiert. Dem erhaltenen Reaktionsgemisch wurde unter Rühren eine Emulsion, hergestellt aus 8,97 kg entionisiertem Wasser, 0,17 kg Dowfax® 2A1, 2,04 kg Styrol und 7,85 kg Methylmethacrylat kontinuierlich zugegeben und anschließend noch 30 Minuten bei 80°C nachpolymerisiert.

Während der Zufuhr der einzelnen Monomerenemulsionen wurden insgesamt 1,67 kg einer Lösung aus 0,16 kg Natriumpersulfat in 2,07 kg entionisiertem Wasser kontinuierlich zugegeben.

Anschließend kühlte man die wässrige Polymerisatdispersion auf 20 bis 25°C (Raumtemperatur) ab.

Die erhaltene wässrige Polymerisatdispersion wies einen Anteil an wasserlöslichen Verbindungen von 2,2 Gew.-%, bezogen auf das in Form von wasserunlösichen Polymerisatteilchen vorliegende Polymerisat auf. Die mittlere Teilchengröße betrug 150 nm.

Die Bestimmung des Gehaltes an wasserlöslichen Verbindungen, bezogen auf das in Form von wasserunlöslichen Polymerisatteilchen vorliegende Polymerisat (Polymerisatfeststoffgehalt), erfolgte wie nachfolgend angegeben. Hierzu wurde in einem ersten Schritt eine aliquote Menge der homogenen wässrigen Polymerisatdispersion entnommen und diese durch Erhitzen auf 140°C/Atmosphärendruck (ca. 1,01 bar absolut) bis zur Gewichtskonstanz getrocknet. Aus dem resultierenden festen Rückstand ließ sich der Gehalt $R_{gesamt}$ (in Gew.-%) an nichtflüchtigen Bestandteilen, bezogen auf die wässrige Polymerisatdispersion, ermitteln. In einem zweiten Schritt wurde eine definierte Menge der homogen vorliegenden wässrigen Polymerisatdispersion solange einer Ultrazentrifugation unterzogen, bis die in disperser Verteilung vorliegenden wasserunlöslichen Polymerisatteilchen gravimetrisch abgeschieden waren. Zu diesem Zweck wurden ca. 40 g der wässrigen Polymerisatdispersion in ein Zentrifugationsröhrchen (Optiseal der Fa. Beckmann) eingewogen und das gefüllte Röhrchen in einen präparativen Rotor (SW 28 der Fa. Beckmann) einer präparativen Ultrazentrifuge (XL-80 K der Fa. Beckmann) gegeben. Anschließend wurde die Probe bei 25°C 12 Stunden mit einer Drehzahl von 26000 Umdrehungen/Minute (entsprechend einer Radialbeschleunigung von ca. 89320 g) gedreht. Anschließend wurde aus dem überstehenden klaren wässrigen Serum eine aliquote Menge entnommen und diese ebenfalls durch Erhitzen auf 140°C/Atmosphärendruck (ca. 1,01 bar absolut) bis zur Gewichtskonstanz getrocknet. Aus dem resultierenden festen Rückstand ließ sich der Gehalt $R_{löslich}$ (in Gew.-%) an nichtflüchtigen wasserlöslichen Bestandteilen, bezogen eingesetzte wässrige Polymerisatdispersion, bestimmen. Der Gehalt G (in Gew.%) an wasserlöslichen Verbindungen in der wässrigen Polymerisatdispersion, bezogen auf das in Form von wasserunlöslichen Polymerisatteilchen vorliegende Polymerisat, wurde nun nach folgender Formel ermittelt:

$$G = \frac{R_{löslich} \times 100\,\%}{(R_{gesamt} - R_{löslich})}$$

Der mittlere Teilchendurchmesser der Polymerisatteilchen wurde generell durch dynamische Lichtstreuung an einer 0,005 bis 0,01 gewichtsprozentigen wässrigen Dispersion bei 23°C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Die gewichtsmittlere Teilchengröße $D_{w50}$ der Polymersaat wurde nach der Methode der Analytischen Ultrazentrifuge [W. Mächtle, Macromolekulare Chemie, Bd 185 (1984) Seiten 1025 bis 1039] bestimmt.

2. Ultrafiltration

Die erhaltene wässrige Polymerisatdispersion wurde mit entionisiertem Wasser auf einen Polymerisatfeststoffgehalt von 21 Gew.-% verdünnt. 3 kg der so erhaltenen verdünnten Polymerisatdispersion wurden in einem Labor CR-Filter (ruhende Membran; die Scherung erfolgte mittels eines Rührblattes dicht über der verwendeten Flachmembran) der Firma Valmet Raisio, Finnland, welcher in einem Umpumpkreis integriert war, mittels der Regeneratcellulosemembran C030F der Firma Nadir Filtrations GmbH, Deutschland, mit einer Trenngrenze von 30000 g/mol, bei 40°C ultrafiltriert. Dabei betrug der transmembrane Druck 1 bar (Überdruck), die Rotationsfrequenz des Rührblattes 40 Hz und der Permeatfluß zwischen 40 und 60 kg/m²h. Die abgetrennte Permeatmenge wurde kontinuierlich durch entionisiertes Wasser ersetzt. Insgesamt wurden 15 kg Permeat abgetrennt. Die erhaltene wässrige Polymerisatdispersion wies einen Anteil an wasserlöslichen Verbindungen von 0,04 Gew.-%, bezogen auf das in Form von wasserunlöslichen Polymerisatteilchen vorliegende Polymerisat auf.

3. Sprühtrocknung

Antiblockmittel

Als Antiblockmittel wurde Aerosil® 200 der Firma Degussa AG, Deutschland, eingesetzt. Hierbei handelt es sich um eine pyrogene Kieselsäure mit einer spezifischen Oberfläche (in Anlehnung an DIN 66131) von ca. 200 m²/g, einer mittleren Primärteilchengröße (in Anlehnung an ASTM C 690-1992) von 12 nm und einer Stampfdichte (in Anlehnung an ISO 787-11) von 50 g/l.

Herstellung des sprühgetrockneten Polymerisatpulvers

Die Sprühtrocknung erfolgte in einem Minor-Labortrockner der Fa. GEA Wiegand GmbH (Geschäftsbereich Niro) mit Zweistoffdüsenzerstäubung und Pulverabscheidung in einem Gewebefilter. Die Turmeingangstemperatur des Stickstoffs betrug 130°C, die Ausgangstemperatur 60°C. Pro Stunde wurden 2 kg der verdünnten wässrigen Polymerisatdispersion eindosiert.

Gleichzeitig mit der verdünnten wässrigen Polymerisatdispersion wurden kontinuierlich 0,1 Gew.-Teile des Antiblockmittels, bezogen auf 100 Gew.-Teile des in Form von wasserunlöslichen Polymerisatteilchen vorliegenden Polymerisats, über eine gewichtsgesteuerte Doppelschnecke in den Kopf des Sprühturms eindosiert.

4. PVC-Formmassen

Die Herstellung einer PVC-Formmasse, welche vorgenanntes Polymerisatpulver als Schlagzähmodifier enthält, erfolgte wie nachfolgend beschrieben: 90 Gew.-Teile PVC (Solvin® 257 RF, Firma Solvin), 0,3 Gew.-Teile Gleitmittel (Loxiol® G72, Firma Cognis), 0,8 Gew.-Teile Gleitmittel (Loxiol® G16, Firma Cognis), 1,1 Gew.-Teile Zinn-Stabilisator (Irgastab® 17 MOK, Firma Ciba) und 25 Gew.-Teile des Polymerisatpulvers aus 3.) wurden in einem Mischer der Firma MTI Mischtechnik Industrieanlagen GmbH, Typ LM 5 FU, gemischt. Innerhalb von 10 Minuten wurde die Mischtemperatur von Raumtemperatur auf 130°C erhöht und anschließend innerhalb von 10 Minuten wieder auf Raumtemperatur abgekühlt. Zur Erstellung eines Walzfells wurde der so erhaltene "dry blend" auf ein Doppelwalzwerk der Firma Dr. Collin GmbH (Typ 110 P) gegeben und 8 Minuten bei 170°C gewalzt. Das so erhaltene Walzfell wurde zugeschnitten, in Pressformen gelegt und 8 Minuten bei einer Temperatur von 180°C und bei einem Druck von 15 bar in einer Laborplattenpresse der Firma Dr. Collin GmbH, Typ 200 P, gepresst. Anschließend wurde der Druck bei vorgenannter Temperatur auf 200 bar erhöht, die Pressplatten 5 Minuten bei diesen Bedingungen belassen und schlussendlich unter einem Druck von 200 bar wieder auf Raumtemperatur abgekühlt. Die resultierenden Pressplatten hatten eine Dicke von 3 mm.

Bestimmung der Transparenz

Die Trübung (nach ASTM D 1003) und die Gesamttransmission der 3 mm dicken Pressplatten wurden mit Hilfe eines Transparenzmessgerätes der Firma Gardner (Haze Gard Plus) bestimmt. Im Falle des vorliegenden Beispiels wiesen die Pressplatten eine Trübung von 9,5 % und eine Gesamttransmission von 82 % auf.

Bestimmung der thermischen Stabilität

11 Probekörper (10 mm x 10 mm) wurden aus dem auf Raumtemperatur abgekühlten Walzfell ausgestanzt. Diese wurden in einem Trockenschrank der Firma Heraeus (UT 6200) bei 180°C gelagert. In Intervallen von 10 Minuten wurde jeweils ein Probekörper entnommen und auf eine Musterkarte aufgeheftet, um eine visuelle Beurteilung der Farbänderung in Abhängigkeit der Verweilzeit zu erfassen. Als Ergebnis wurde die Zeit in Minuten dokumentiert, in der eine Farbänderung von gelb nach dunkelbraun erfolgt. Im vorliegenden Fall wurde eine thermische Stabilität von 100 Minuten bestimmt.

Bestimmung der Farbwerte

Die Farbwerte L* , a*, b* der 3 mm dicken Pressplatten wurden vor weißem und schwarzem Hintergrund (Standardkachelsatz, Firma Dr. Lange) in Anlehnung an DIN 6167 mit Hilfe des Farbmessgerätes Luci 100 der Firma Dr. Lange bestimmt (Lichtart: D65, Normalbeobachter: 10 °). Im vorliegenden Fall resultierte nach DIN 6167 ein Gelbwert (berechnet aus L*, a* und b*) von 31. Bei schwarzem Hintergrund wurde ein b*-Wert von -4,3 bestimmt.

Witterungsstabilität

Eine künstliche Bewitterung der 3 mm Pressplatten erfolgte per Xeno-Bewitterung nach ISO 4892-2A und DIN 53387 mit einem Xenotestgerät der Firma Atlas, Typ CI 4000. Die Bewitterung erfolgte in wiederkehrenden Zyklen von 102 Minuten Belichtung trocken und 18 Minuten Belichtung und Besprühen mit Wasser bei einer Probentemperatur von 65°C und einer relativen Luftfeuchte von 60 bis 80 %. Die Bestrahlungsstärke betrug 550 W/m$^2$ im Wellenlängenbereich von 290 bis 800 nm, 3,3 W/m$^2$ im Wellenlängenbereich von 290 bis 320 nm und 60,5 W/m$^2$ im Wellenlängenbereich von 320 bis 400 nm. Anhand der bewitterten Proben wurden Farbmessungen nach DIN 53236 (Lichtart : D65; Normalbeobachter: 10°) sofort, nach 50, 100, 500 und 1000 Stunden mit einem Gerät der Firma Minolta, Typ CM 3600D bestimmt. Im Falle des vorliegenden Beispiels ergab sich bei einer Bewitterungszeit von 1000 Stunden ein Gelbwert von 82.

Vergleichsbeispiel:

Die Herstellung der wässrigen Polymerisatdispersion, des Polymerisatpulvers und PVC-Formmasse erfolgte analog des Beispiels mit der Ausnahme, dass keine Abtrennung der wasserlöslichen Verbindungen mittels Ultrafiltration erfolgte.

Die Formmassen des Vergleichsbeispiels wiesen eine Gesamttransmission von 80 % und eine Trübung von 13,0 % auf. Der Gelbwert nach DIN 6167 betrug 36. Bei einem schwarzen Hintergrund wurde ein b*-Wert von -4,8 gemessen. Die thermische Stabilität der Probekörper betrug 70 Minuten und bei einer Bewitterungszeit von 1000 Stunden wurde ein Gelbwert von 107 gemessen.

**Patentansprüche**

1. Verfahren zur Herstellung von Polymerisatpulver aus einer wässrigen Polymerisatdispersion mit einem im Vergleich zu dieser wässrigen Polymerisatdispersion geringeren Anteil an wasserlöslichen Verbindungen, bezogen auf das in Form von wasserunlöslichen Polymerisatteilchen vorliegende Polymerisat, **dadurch gekennzeichnet, dass** die wässrige Polymerisatdispersion in einem ersten Verfahrensschritt einer Membranfiltration und in einem nachfolgenden zweiten Verfahrensschritt einer Sprühtrocknung unterworfen wird.

2. Verfahren nach Anspruch 1, **dadurch gekennzeichnet, dass** das Polymerisat schlagzähmodifizierende Eigenschaften in transparenten Polyvinylchloridmassen aufweist.

3. Verfahren nach Anspruch 1 oder 2, **dadurch gekennzeichnet, dass** die wässrige Polymerisatdispersion solange einer Membranfiltration unterzogen wird, bis der Anteil der wasserlöslichen Stoffen ≤ 3 Gew.-%, bezogen auf das in Form von wasserunlöslichen Polymerisatteilchen vorliegende Polymerisat, ist.

4. Verfahren nach Anspruch 3, **dadurch gekennzeichnet, dass** die wässrige Polymerisatdispersion solange einer Membranfiltration unterzogen wird, bis der Anteil der wasserlöslichen Stoffen ≤ 1 Gew.-%, bezogen auf das in Form von wasserunlöslichen Polymerisatteilchen vorliegende Polymerisat, ist.

5. Verfahren nach einem der Ansprüche 1 bis 4, **dadurch gekennzeichnet, dass** die Sprühtrocknung der wässrigen Polymerisatdispersion in Anwesenheit von 0,01 bis 10 Gew.-Teilen eines anorganischen Antiblockmittels mit einer mittleren Teilchengröße von 0,001 bis 20 $\mu$m, bezogen auf 100 Gew.-Teile des in Form von wasserunlöslichen Polymerisatteilchen vorliegenden Polymerisats, erfolgt.

**Claims**

1. A process for preparing polymer powder from an aqueous polymer dispersion with water-soluble compounds, the fraction of such compounds being smaller than that of said aqueous polymer dispersion and being based on the polymer present in the form of polymer particles insoluble in water, which comprises subjecting the aqueous polymer dispersion to membrane filtration in a first step of the process and to spray drying in a subsequent second step of the process.

2. The process according to claim 1, wherein the polymer has impact-modifying properties in transparent polyvinyl chloride compositions.

3. The process according to claim 1 or 2, wherein the aqueous polymer dispersion is subjected to membrane filtration until the content of the water-soluble substances is ≤ 3% by weight, based on the polymer present in the form of polymer particles insoluble in water.

4. The process according to claim 3, wherein the aqueous polymer dispersion is subjected to membrane filtration until the content of the water-soluble substances is ≤ 1% by weight, based on the polymer present in the form of polymer particles insoluble in water.

5. The process according to any of claims 1 to 4, wherein the spray drying of the aqueous polymer dispersion takes place in the presence of from 0.01 to 10 parts by weight of an inorganic antiblocking agent with a average particle size of from 0.001 to 20 $\mu$m, based on 100 parts by weight of the polymer present in the form of polymer particles insoluble in water.

**Revendications**

1. Procédé de fabrication d'une poudre polymère à partir d'une dispersion polymère aqueuse, ayant une proportion faible en comparaison de cette dispersion polymère aqueuse en composés insolubles dans l'eau, par rapport au polymère présent sous la forme de particules polymères insolubles dans l'eau, **caractérisé en ce que** la dispersion polymère aqueuse est soumise lors d'une première étape de procédé à une filtration sur membrane et lors d'une seconde étape de procédé ultérieure à un séchage par pulvérisation.

2. Procédé selon la revendication 1, **caractérisé en ce que** le polymère présente des propriétés de modification de la résistance aux impacts dans des matériaux transparents de chlorure de polyvinyle.

3. Procédé selon la revendication 1 ou 2**, caractérisé en ce que** la dispersion polymère aqueuse est soumise à une filtration sur membrane jusqu'à ce que la proportion de substances insolubles dans l'eau soit inférieure ou égale à 3 % en poids, par rapport au polymère présent sous la forme de particules polymères insolubles dans l'eau.

4. Procédé selon la revendication 3, **caractérisé en ce que** la dispersion polymère aqueuse est soumise à une filtration sur membrane jusqu'à ce que la proportion de substances insolubles dans l'eau soit inférieure ou égale à 1 % en poids, par rapport au polymère présent sous la forme de particules polymères insolubles dans l'eau.

5. Procédé selon l'une quelconque des revendications 1 à 4, **caractérisé en ce que** le séchage par pulvérisation de la dispersion polymère aqueuse a lieu en présence de 0,01 à 10 parties en poids d'un agent antiadhérent inorganique ayant une taille de particule moyenne de 0,001 à 20 $\mu$m, par rapport à 100 parties en poids du polymère présent sous la forme de particules polymères insolubles dans l'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2013020 A
- DE 2130989 A
- DE 2244519 A
- DE 2249023 A
- DE 2438402 A
- DE 2557828 A
- DE 3216988 A
- DE 3216989 A
- DE 3316224 A
- DE 3365229 A
- DE 3460373 A
- EP 50848 A
- EP 93854 A
- EP 93855 A
- EP 124700 A
- EP 379086 A
- US 3426101 A
- US 3971835 A
- US 4064197 A
- US 4145380 A
- US 4128605 A
- US 4536548 A
- US 4581414 A
- DE 2214410 A
- DE 4003422 A
- WO 0035971 A
- JP 2199130 A
- US 6248809 B
- DE 2817226 A
- DE 3101413 A

### In der Beschreibung aufgeführte Nicht-Patentliteratur

- Encyclopedia of Polymer Science and Engineering. John Wiley & Sons, Inc, 1987, vol. 8, 659-677
- **D.C. BLACKLEY.** Emulsion Polymerisation. Applied Science Publishers, Ltd, 1975, 155-465
- **D.C. BLACKLEY.** Polymer Latices. Chapman & Hall, 1997, vol. 1, 33-415
- **H. WARSON.** The Applications of Synthetic Resin Emulsions. Ernest Benn, Ltd, 1972, 49-244
- **D. DIEDERICH.** Chemie in unserer Zeit. Verlag Chemie, 1990, vol. 24, 135-142
- **J. PIIRMA.** Emulsion Polymerisation. Academic Press, 1982, 1-287
- **F. HÖLSCHER.** Dispersionen synthetischer Hochpolymerer. Springer-Verlag, 1969, 1-160
- **G. KANIG.** Kolloid-Zeitschrift & Zeitschrift für Polymere. vol. 190, 1
- **T.G. FOX.** *Bull. Am. Phys. Soc.,* 1956, vol. II (1), 123
- Ullmann's Encyclopädie der technischen Chemie. Verlag Chemie, 1980, vol. 19, 18
- Ullmann's Encyclopedia of Industrial Chemistry. Verlag Chemie, 1992, vol. A21, 169
- **J. BRANDRUP ; E.H. IMMERGUT.** Polymer Handbook. J. Wiley, 1966
- **J.WILEY.** POLYMER HANDBOOK. 1975
- POLYMER HANDBOOK. J. Wiley, 1989
- Analytical Ultracentrifugation. **S.E. HARDINGET.** Biochemistry and Polymer Science. Royal Society of Chemistry, 1992
- Analysis of Polymer Dispersions with an Eight-Cell-AUC-Multiplexer: High Resolution Particle Size Distribution and Density Gradient Techniques. 147-175
- **W. MÄCHTLE.** *Makromolekulare Chemie,* 1984, vol. 185, 1025-1039
- **FESTSTOFFEN M.C. WILKINSON ; D. FAIRHURST.** *J. Coll. Interf. Sci.,* 1981, vol. 79 (1), 272-277
- **J. ZAHKA ; L. MIR.** *Chem. Eng. Progr.,* 1977, vol. 73, 53-55
- **R.H. OTTEWILL ; J.N. SHAW.** *Z. U. Z. Polym.,* 1967, vol. 215 (2), 161ff
- **M.E. LABIB ; A.A. ROBERTSON.** *J. Coll. Interf. Sci.,* 1978, vol. 67, 543ff
- **T. MELIN ; R. RAUTENBACH.** Membranverfahren. Springer Verlag, 2003
- **M. CHERYAN.** Ultrafiltration Handbook. Technomic Pulbishing Company Inc, 1986
- **W.M. SAMHABER.** *Chem.-Ing.-Tech.,* 1987, vol. 59, 844-850
- **W. MÄCHTLE.** *Macromolekulare Chemie,* 1984, vol. 185, 1025-1039